(19) Europäisches Patentamt / European Patent Office / Office européen des brevets

(11) **EP 3 540 510 B1**

(12) **EUROPEAN PATENT SPECIFICATION**

(45) Date of publication and mention
of the grant of the patent:
**24.06.2020 Bulletin 2020/26**

(51) Int Cl.:
*G03B 21/14* (2006.01)      *F21V 7/04* (2006.01)
*G02B 5/10* (2006.01)      *G02B 27/09* (2006.01)

(21) Application number: **16921032.5**

(86) International application number:
**PCT/JP2016/083686**

(22) Date of filing: **14.11.2016**

(87) International publication number:
**WO 2018/087918 (17.05.2018 Gazette 2018/20)**

(54) **LIGHT SHAPING DEVICE**

LICHTFORMUNGSVORRICHTUNG

DISPOSITIF DE MISE EN FORME DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.09.2019 Bulletin 2019/38**

(73) Proprietor: **Mitsubishi Electric Corporation
Chiyoda-ku
Tokyo 100-8310 (JP)**

(72) Inventor: **YAGYU, Shinji
Tokyo 100-8310 (JP)**

(74) Representative: **Pfenning, Meinig & Partner mbB
Patent- und Rechtsanwälte
Joachimsthaler Straße 10-12
10719 Berlin (DE)**

(56) References cited:

WO-A1-2007/032153      WO-A1-2010/015478
JP-A- 2000 121 998      JP-A- 2004 281 103
JP-A- 2005 032 661      JP-A- 2005 283 817
JP-A- 2010 097 002      JP-A- 2011 165 671
JP-A- 2011 227 525      JP-A- 2014 017 052
US-A1- 2014 362 600

**Description**

Technical Field

The technique disclosed in the Description relates to a light shaping apparatus that uses a semiconductor laser device.

Background Art

Projectors and other equipment use, as their light sources, solid-state light sources (e.g., light-emitting diodes) in addition to discharge lamps (e.g., super-high pressure mercury lamps or xenon lamps).

Moreover, laser light sources with long life, low power consumption, high luminance, and high color purity have been recently used as the projectors' light sources.

To obtain a desired optical output, large projectors for digital cinema and other purposes are provided with additional laser light sources, thus achieving a high output. Unfortunately, such addition involves projector upsizing or high manufacturing cost. Accordingly, optical-output enhancement per laser light source and component downsizing are required.

Further, semiconductor lasers, which are one example of the laser light source, emit light usually having an ellipsoid shape. The emitted light diverges at approximately 8 degrees in the full-width at half-maximum in the slow-axis direction along an active layer, and diverges at approximately 30 degrees in the fast-axis direction orthogonal to the slow-axis direction.

An oscillation region or laser output window of each semiconductor laser is relatively narrow; its width in the fast axis, which is the thickness direction of the active layer, is 2 $\mu$m or more and 10 $\mu$m or less. On the other hand, the width in the slow-axis direction along the active layer is several tens of micrometers or more and several hundreds of micrometers or less. Hence, the laser output window is a linear light source as a whole.

Light collimation is required in order to use the light emitted from the semiconductor laser as the light source of the projector. This collimation is done by shaping anisotropic light emitted from the linear light source, so that the efficiency of light use is enhanced in a projector optical system disposed at the posterior stage of the projector.

A collimator lens is inserted in a predetermined position in front of the laser output window. Since the laser output window is narrow in the fast-axis direction, collimated light is easily obtained through the collimator lens. Meanwhile, this collimator lens has difficulty in collimating light in the slow-axis direction, in which the laser output window is 10 times or more wider than in the fast-axis direction.

Collimating the light emitted from the laser output window whose width is greater in the slow-axis direction needs a separate collimator lens having a long focal length. Unfortunately, when a lens is provided to be distant away from the laser output window in order to adjust the focus of the collimator lens, beams of light emitted from the adjacent laser output windows interfere with each other before entering the collimator lens. Hence, it is difficult to shape individual beams of light properly.

To overcome this inconvenience, Patent Document 1, for instance, (United States Patent No. 5513201) proposes an optical member that shapes beams of light in the fast-axis direction, and then turns the individual beams of light by 90 degrees with respect to the optical axis, followed by performing light shaping on the remaining beams of light in the slow-axis direction as light shaping in the fast-axis direction.

Prior Art Documents

Patent Documents

Patent Document 1: United States Patent No. 5513201

Summary

Problem to be Solved by the Invention

Patent Document 1 eliminates the need for a separate collimator lens having a long focal length to shape the light in the slow-axis direction. Patent Document 1 achieves light collimation by shaping the light in the slow-axis direction using a collimator lens having a focal length as long as that of a collimator lens used to shape the light in the fast-axis direction. Further, since there is no need to provide a collimator lens having a long focal length, a long optical path is not necessary to shape the two kinds of light beam that travel in different directions.

The aforementioned method, however, requires an optical device, called a twister, that converts the fast-axis direction and the slow-axis direction after the light shaping in the fast-axis direction, and further requires performing of second-time light shaping in the fast-axis direction behind the optical device. Accordingly, an optical system that needs a long distance in the optical-axis direction as a whole, has to be formed.

To reduce manufacturing cost, the projectors' light sources are strongly required to be downsized. Thus, the aforementioned two-step light shaping, which involves an increase in the size of the light source, is not preferable.

The technique disclosed in the Description has been made to solve this problem. The technique relates to shaping light emitted from a linear light source while preventing mechanism upsizing.

Means to Solve the Problem

A light shaping apparatus according to independent claim 1 includes a linear light source having at least one light-emitting point, a reflective mirror portion having a reflective surface that is an orthogonal parabolic surface formed by rotating a curved line about a rotation axis, and an optical device disposed at a convergence point where light emitted from the linear light source converges. The light emitted from the linear light source is reflected by the reflective mirror portion surrounding at least part of the linear light source, and further converges at the convergence point. The rotation axis of the reflective mirror portion extends in the longer-side direction of the linear light source. The light-emitting point of the linear light source is located on the rotation axis of the reflective mirror portion. The optical device has an entrance end face located at the convergence point. The entrance end face is an end face on which the light emitted from the linear light source is incident.

Effects of the Invention

The light shaping apparatus according to independent claim 1 includes the linear light source having at least one light-emitting point, the reflective mirror portion having a reflective surface that is an orthogonal parabolic surface formed by rotating a curved line about a rotation axis, and the optical device disposed at a convergence point where light emitted from the linear light source converges. The light emitted from the linear light source is reflected by the reflective mirror portion surrounding at least part of the linear light source, and further converges at the convergence point. The rotation axis of the reflective mirror portion extends in the longer-side direction of the linear light source. The light-emitting point of the linear light source is located on the rotation axis of the reflective mirror portion. The optical device has an entrance end face located at the convergence point. The entrance end face is an end face on which the light emitted from the linear light source is incident. Such a configuration enables concentrating of light that diverges in the longer-side direction of the linear light source using the reflective mirror portion with the reflective surface, which is an orthogonal parabolic surface, thereby shaping the light emitted from the linear light source while preventing mechanism upsizing.

These and other objects, features, aspects, and advantages of the technique disclosed in the Description will become more apparent from the following detailed description of the Description when taken in conjunction with the accompanying drawings.

Brief Description of Drawings

FIG. 1 is a schematic side view of a configuration for implementing a light shaping apparatus according to an embodiment.

FIG. 2 is a diagram illustrating a parabolic mirror according to the embodiment.

FIG. 3 is a diagram illustrating an orthogonal parabolic mirror according to the embodiment.

FIG. 4 is a schematic plan view of a configuration for implementing the light shaping apparatus according to the embodiment.

FIG. 5 is a schematic perspective view of a configuration for implementing the light shaping apparatus according to the embodiment.

FIG. 6 is a schematic plan view of a configuration for implementing a light shaping apparatus according to another embodiment.

FIG. 7 is a side view of a configuration for implementing a light shaping apparatus according to a modification of the embodiment.

Description of Embodiment(s)

The embodiments will be described with reference to the accompanying drawings.

The drawings are schematic; thus, for easy description, configurations will be omitted or simplified as appropriate. In addition, the interrelationships of the sizes and positions of configurations illustrated on different drawing sheets are not necessarily exact, and thus can be changed as appropriate.

Throughout the following description, like components will be denoted by the same sings and will be provided with like names and like functions. Hence, the detailed description of the like components will not be elaborated upon for redundancy avoidance in some cases.

Throughout the following description, any terms, such as "top", "under", "left", "right", "side", "bottom", "front", and "back", that indicate specific positions and specific directions are used for the sake of easy understanding of the embodiments. These terms thus have nothing to do with actual directions when the embodiments are practically implemented.

<First Embodiment

The following describes a light shaping apparatus according to a first embodiment. Although the embodiment describes a semiconductor laser device as one example of a linear light source, the linear light source is not limited to the semiconductor laser device.

<Configuration of Light Shaping Apparatus>

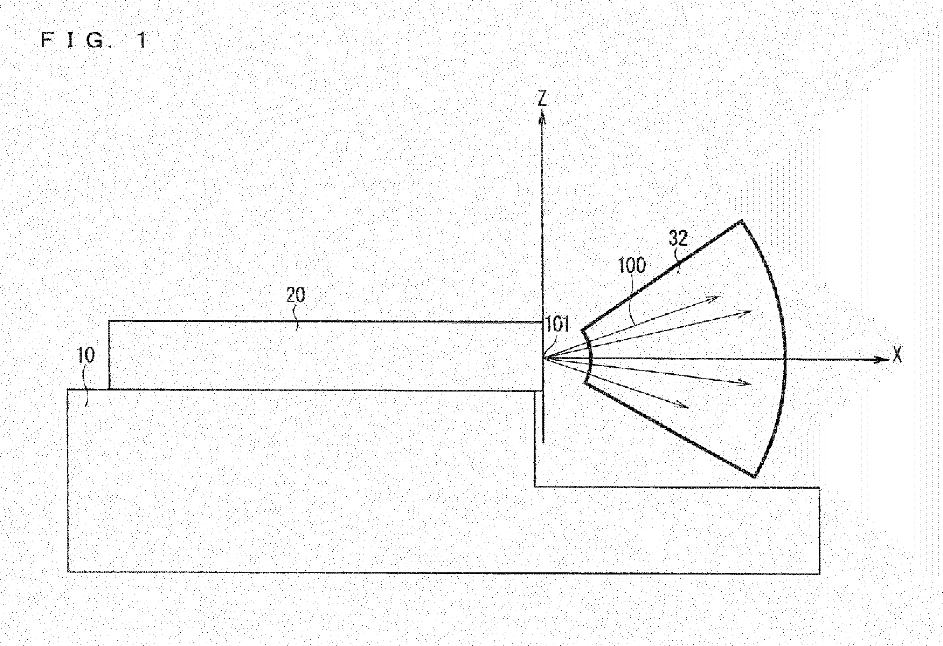

FIG. 1 is a schematic side view of a configuration for implementing the light shaping apparatus according to the embodiment. As illustrated in FIG. 1, the light shaping apparatus includes a stem 10, a semiconductor laser device 20 disposed on the stem 10 and having at least one light-emitting point, and a reflective mirror portion 32 that is disposed on the stem 10 and substantially collimates light emitted from the semiconductor laser device 20.

FIG. 1 schematically illustrates, using arrows, laser light 100 travelling from an exit end face 101, which is the light-emitting point of the semiconductor laser device 20, toward the reflective mirror portion 32. FIG. 1 illustrates laser light divergence in the Z-axis direction in FIG. 1, i.e., the fast-axis direction in FIG. 1.

The stem 10 is a plate member whose upper surface is provided with a step. The stem 10 is a metal stem base formed of a material having large thermal conductivity (e.g., Cu) whose surface is plated with Au and provided with a metallized pattern. The stem 10 fastens the semiconductor laser device 20 and the reflective mirror portion 32, and dissipates heat generated in the semiconductor laser device 20 to a cooler (not shown) below the stem 10.

The semiconductor laser device 20 is a laser diode having at least one light-emitting point on an end face of a semiconductor chip of, for instance, GaAs or AlGaN. The laser light 100 is emitted from the light-emitting points of the semiconductor laser device 20 approximately along an optical axis perpendicular to the end face of the semiconductor chip and parallel to the upper surface or lower surface of the semiconductor chip, that is, approximately along the X-axis in FIG. 1.

Here, the junction between the stem 10 and the semiconductor laser device 20 is typically made by solder. In particular, AuSn solder, which has high reliability and high thermal conductivity, is desirably used.

The divergence angle of the light emitted from the semiconductor laser device 20, in full, is about 80 degrees in the fast-axis direction. Accordingly, the semiconductor laser device 20 is directly on the upper surface of the stem 10 in such a manner that the exit end face 101 of the semiconductor laser device 20 is placed in a position flush with the side surface of the stem 10 or in a position slightly protruding from the side surface of the stem 10 so that the laser light 100 from the semiconductor laser device 20 does not hit the stem 10.

The reflective mirror portion 32, which is fastened by a retainer (not shown), is disposed in front of the exit end face 101 of the semiconductor laser device 20. The reflective mirror portion 32 has an optical working surface or reflective surface composed of an orthogonal parabolic mirror.

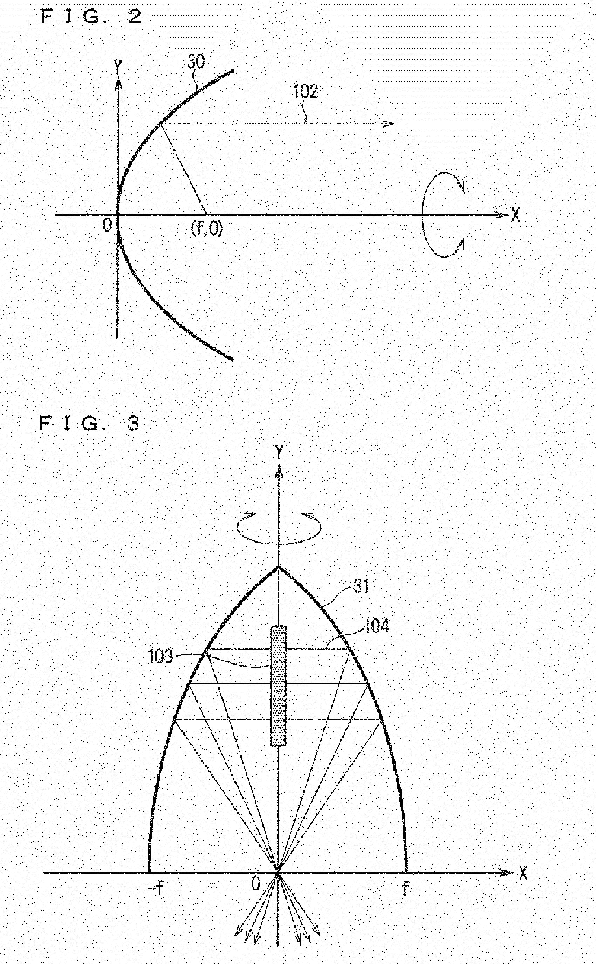

FIG. 2 is a diagram illustrating a parabolic mirror. As illustrated in FIG. 2, a commonly known parabolic mirror has a curved surface, i.e., a parabolic surface, formed by rotating, about the X-axis, a curved line 30 whose XY cross-sectional surface is expressed by expression (1), where f denotes a focal length. This parabolic surface is a reflective surface.

[Numeral 1]

$$Y^2 = 4fX \qquad \dots (1)$$

The parabolic mirror can collimate light 102 emitted from a point light source by concentrating the light 102 emitted from the point light source positioned at the focal point of the parabolic surface at its reflective surface, which is composed of the parabolic surface. Such a parabolic mirror is widely used as a mechanism that concentrates light from a lamp light source of a projector.

FIG. 3 is a diagram illustrating an orthogonal parabolic mirror. As illustrated in FIG. 3, the orthogonal parabolic mirror has a curved surface formed by rotating, about the Y-axis in FIG. 3, a curved line 31 whose XY cross-sectional surface is expressed by expressions (2) and (3), where f denotes a focal length. This curved surface is a reflective surface. Unlike the parabolic mirror, the orthogonal parabolic mirror can concentrate, onto one point, light 104 emitted from a linear light source 103 extending in the Y-axis direction in FIG. 3.

[Numeral 2]

$$Y = 2 \times \{f(f+X)\}^{1/2} \quad \left(\text{where } -f \leq X \leq 0 \text{ is satisfied}\right) \dots (2)$$

$$Y = 2 \times \{f(f-X)\}^{1/2} \quad \left(\text{where } 0 \leq X \leq f \text{ is satisfied}\right) \dots (3)$$

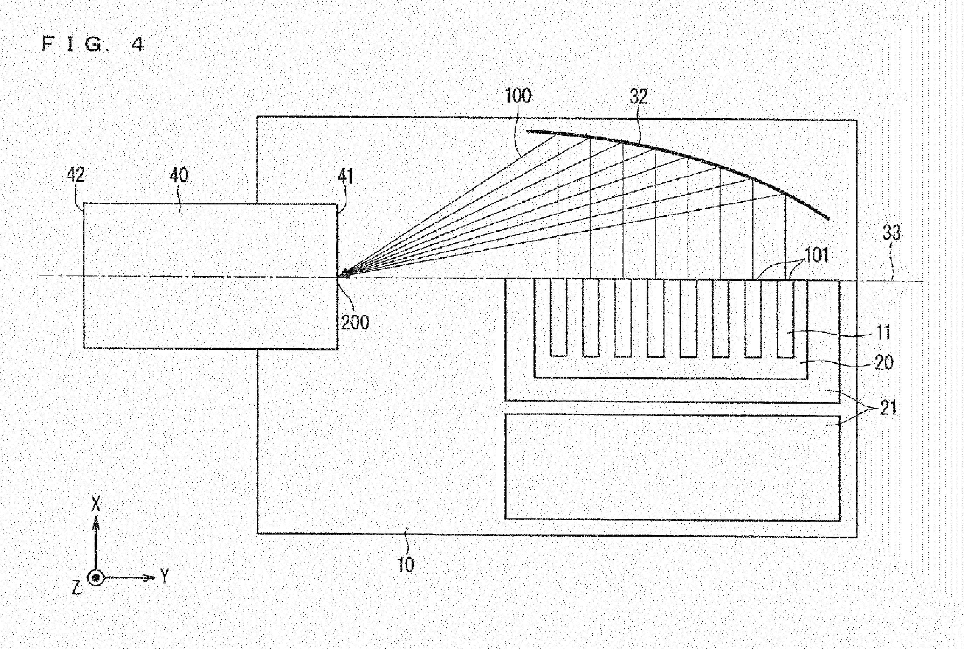

FIG. 4 is a schematic plan view of a configuration for implementing the light shaping apparatus according to the embodiment. FIG. 4 illustrates the behavior of the laser light 100 in the Y-axis direction, i.e., the slow-axis direction, in FIG. 4.

As illustrated in FIG. 4, the semiconductor laser device 20 is a linear light source extending in the Y-axis direction in FIG. 4. The semiconductor laser device 20 is connected to a connecting substrate 21. The semiconductor laser device 20 has a plurality of waveguides 11 arranged at predetermined intervals. Each waveguide 11 extends in the X-axis direction in FIG. 4. The exit end faces 101 of the waveguides 11 are arranged in the Y-axis direction in FIG. 4.

The reflective mirror portion 32 is disposed in front of the exit end faces 101 of the semiconductor laser device 20.

The dotted line in FIG. 4 denotes a rotation axis 33 of the orthogonal parabolic mirror of the reflective mirror portion 32. The rotation axis 33 extends in the longer-side direction of the semiconductor laser device 20. In the illustration of FIG. 4, the exit end faces 101 of the waveguides 11 are arranged to coincide with the rotation axis 33. The exit end faces 101 of the semiconductor laser device 20 are arranged on the rotation axis 33 of the orthogonal parabolic mirror of the reflective mirror portion 32. This arrangement enables the reflective mirror portion 32 to reflect the laser light 100 vertically emitted from the exit end faces 101 of the semiconductor laser device 20, and to further concentrate the laser light 100 onto one point, i.e., a convergence point 200.

Here, the light in the slow-axis direction has a divergence angle of approximately 8 degrees in full. Some of the light whose divergence angle is 0 degree converges through optical paths as illustrated in FIG. 4. Meanwhile, some of the light whose divergence angle is not 0 degree scatters as divergent components of light at the convergence point 200. Accordingly, the convergence point 200 is not an ideal point, but a substantially circular region having a certain diameter.

In theory, the allowable divergence angle of the light in the fast-axis direction is, in full, up to 180 degrees. Meanwhile, a smaller divergence angle in the slow-axis direction achieves an ideal convergence of light.

The light shaping apparatus according to the embodiment includes an optical device 40 disposed at the convergence point 200 formed by the light concentrated by the reflective mirror portion 32. The optical device 40 has a rectangular entrance end face 41 positioned at the convergence point 200, which is formed by the light concentrated by the reflective mirror portion 32. The optical device 40 is a pillar structure as a whole.

The optical axis of the optical device 40 coincides with the rotation axis 33 of the reflective mirror portion 32. Further, the optical device 40 has an exit end face 42 opposite the entrance end face 41, which is positioned at the convergence point 200 formed by the light concentrated by the reflective mirror portion 32. The entrance end face 41 of the optical device 40 is an end surface on which the light is incident. The exit end face 42 of the optical device 40 is an end surface from which the light exits.

The laser light 100 concentrated by the reflective mirror portion 32 is incident on the entrance end face 41 of the optical device 40. This provides, on the exit end face 42 of the optical device 40, a highly homogeneous area light source suitable for a projector optical system that is posterior to the optical device 40. At this time, the optical device 40 reflects the incident light multiple times and outputs collimated light. Examples of the optical device 40 include a rod integrator, which is typically solid, or a light pipe, which is hollow.

As described above, the light shaping apparatus according to the embodiment can efficiently concentrate the laser light 100, which is emitted from the semiconductor laser device 20 and is extremely anisotropic, using the configuration of a simple optical member.

Further, placing the linear light source on the rotation axis 33 enables the reflective mirror portion 32 to concentrate the light emitted from the linear light source onto a predetermined point. Thus, the reflective mirror portion 32 is a means for light concentration that is suitable not only for the semiconductor laser device 20 having a single emitter with only one light-emitting point, but also for a multi-emitter semiconductor laser device having a plurality of light-emitting points arranged in its slow-axis direction.

Still further, the convergence point 200, which is formed by the light concentrated by the reflective mirror portion 32, is a substantially circular region. Accordingly, when a projector optical system is placed at the posterior stage of the optical device 40, a light source image is successfully brought into conformity with an entrance window on which the concentrated light is incident. In this case, there is no need to reflect a relative position of the reflective mirror portion 32 in its rotation direction with respect to the rectangular entrance end face 41 of the optical device 40, such as a rod integrator or a light pipe.

That is, concentrating the light emitted from the linear light source using a mere image-forming optical system provides a light source image that is linear. Hence, when the light enters the optical device 40 with the rectangular entrance end face 41, the longer-side direction of the linear light source image needs to coincide with the longer-side direction of the entrance end face 41 of the optical device 40. To do this, an additional mirror means or other means needs to be placed between both, and its rotation direction needs to be adjusted. Meanwhile, the light shaping apparatus according to the embodiment eliminates this need.

Referring to the orthogonal parabolic mirror of the reflective mirror portion 32, the reflective surface does not have to extend to the entire circumference with respect to the rotation axis 33.

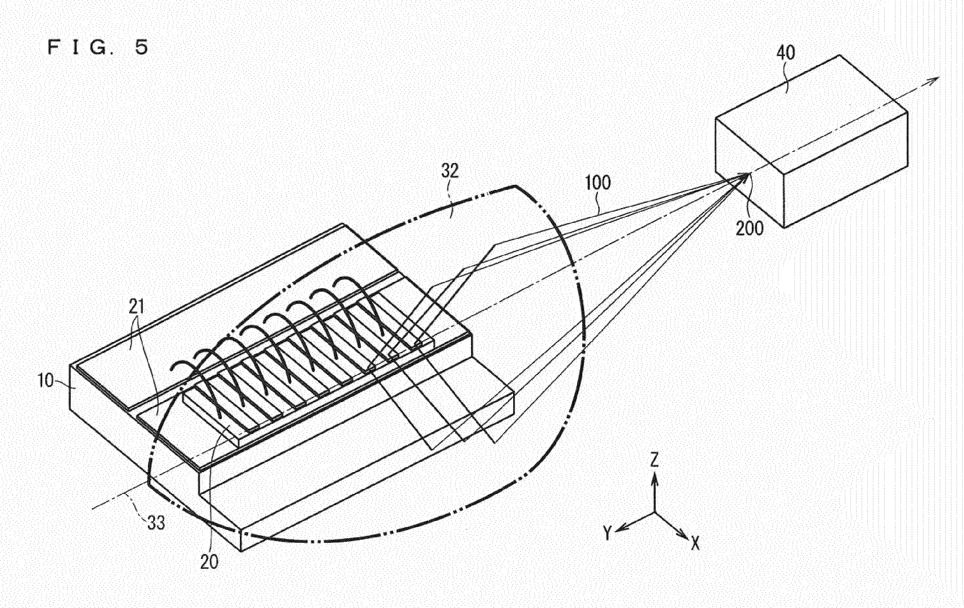

FIG. 5 is a schematic perspective view of a configuration for implementing the light shaping apparatus according to the embodiment. As illustrated in FIG. 1 or 5, the orthogonal parabolic mirror of the reflective mirror portion 32 partly has such a shape as to not interfere with the semiconductor laser device 20 or peripheral members (not shown) including the stem 10 while allocating an area necessary to receive the laser light 100 emitted from the semiconductor laser device 20. Such a shape sufficiently achieves a desired effect.

<Second Embodiment

The following describes a light shaping apparatus according to a second embodiment. Like elements between the forgoing embodiment and the present embodiment are denoted by the same signs, and will not be elaborated upon.

<Configuration of Light Shaping Apparatus>

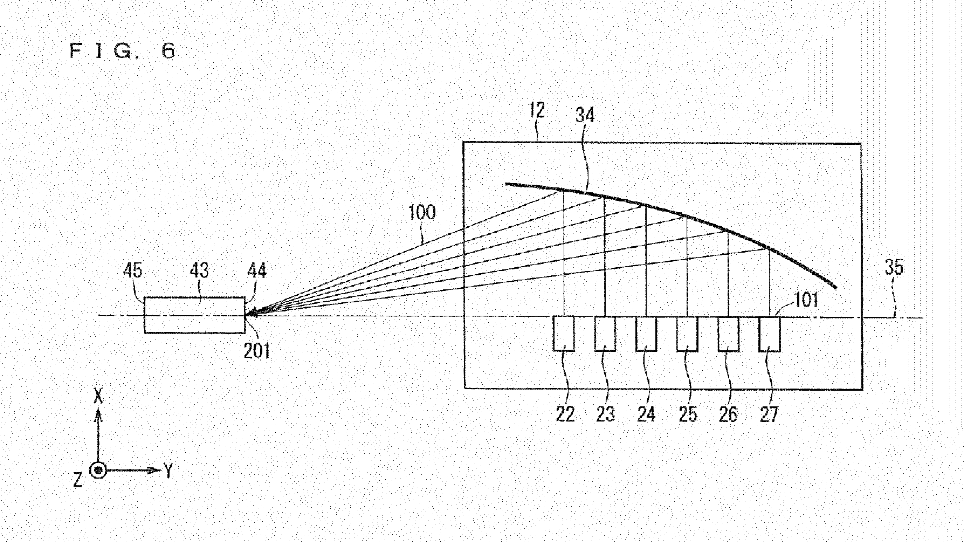

FIG. 6 is a schematic plan view of a configuration for implementing the light shaping apparatus according to the embodiment. As illustrated in FIG. 6, the light shaping apparatus according to the embodiment includes a plurality of semiconductor laser devices: the semiconductor laser devices 22, 23, 24, 25, 26, and 27. The light-emitting points of these semiconductor laser devices are arranged along a rotation axis 35 of an orthogonal parabolic mirror of a reflective mirror portion 34. Each semiconductor laser device is disposed on the upper surface of a stem 12. The semiconductor laser devices are arranged in the Y-axis direction in FIG. 6, and each forms a linear light source extending in the Y-axis direction in FIG. 6.

The reflective mirror portion 34 is fastened in a predetermined position by a retainer (not shown). Further, the reflective mirror portion 34 is disposed in front of the exit end faces 101 of the semiconductor laser devices.

In FIG. 6, the rotation axis 35 of the orthogonal parabolic mirror of the reflective mirror portion 34 is denoted by a dotted line. In the illustration of FIG. 6, the exit end faces 101 of the semiconductor laser devices are arranged to coincide with the rotation axis 35.

Like the illustration of FIG. 4, the reflective mirror portion 34 can efficiently concentrate the laser light 100 from the semiconductor laser devices (i.e., the semiconductor laser devices 22, 23, 24, 25, 26, and 27) onto a convergence point 201.

As such, the laser light 100, emitted from the individual semiconductor laser devices, can be efficiently concentrated as long as the semiconductor laser devices are arranged in the Y-axis direction in FIG. 6 in such a manner that their linear light sources are aligned on the rotation axis 35.

The light shaping apparatus according to the embodiment includes an optical device 43 disposed at the convergence point 201 formed by the light concentrated by the reflective mirror portion 34. The optical device 43 has a rectangular entrance end face 44 positioned at the convergence point 201, which is formed by the light concentrated by the reflective mirror portion 34. The optical device 43 is a pillar structure as a whole. Further, the optical device 43 has an exit end face 45 opposite the entrance end face 44, which is positioned at the convergence point 201 formed by the light concentrated by the reflective mirror portion 34. The entrance end face 44 of the optical device 43 is an end surface on which the light is incident. The exit end face 45 of the optical device 43 is an end surface from which the light exits.

The concentrated light converges on the same convergence point to constitute an approximately circular light source image. The approximately circular light source image at the convergence point achieves an advantage similar to that in the first embodiment with regard to the conformity with the optical device 43 in its rotation-axis direction.

Arranging the semiconductor laser devices and further synthesizing the beams of laser light 100, emitted from the individual semiconductor laser devices, achieve an increased output from the light shaping apparatus. In the configuration according to the embodiment in particular, placing the reflective mirror portion 34 whose size corresponds to the total length of the linear light sources can, in theory, synthesize a number of beams of light.

For efficient light concentration, the reflective mirror portion 34 needs to be disposed in a proper position with respect to the linear light sources. It is commonly not easy to identify the position of the rotation axis 35 of the orthogonal parabolic mirror of the reflective mirror portion 34. Hence, in such positioning with respect to the linear light sources, observing the state of the convergence point 201 is desirable.

The optical device 43, which has a pillar shape, is not difficult to place along the linear light sources. That is, the optical device 43 can be placed accurately with respect to the semiconductor laser devices without problems. Placing, further, the reflective mirror portion 34 in this situation enables position adjustment while observing the position and angle distribution of the convergence point 201 of the laser light 100 incident on the optical device 43.

In the angle distribution observation, a distribution on a screen disposed in a location spaced away by a certain distance, that is, a far-field pattern, needs to be observed.

Once the reflective mirror portion 34 gets into its specified position, the position of the reflective mirror portion 34 can be fastened exactly using an adhesive, through a retainer disposed in a predetermined position with respect to the semiconductor laser devices. For instance, an epoxy adhesive achieves highly reliable component-fastening in combination with ultraviolet curing and thermal curing.

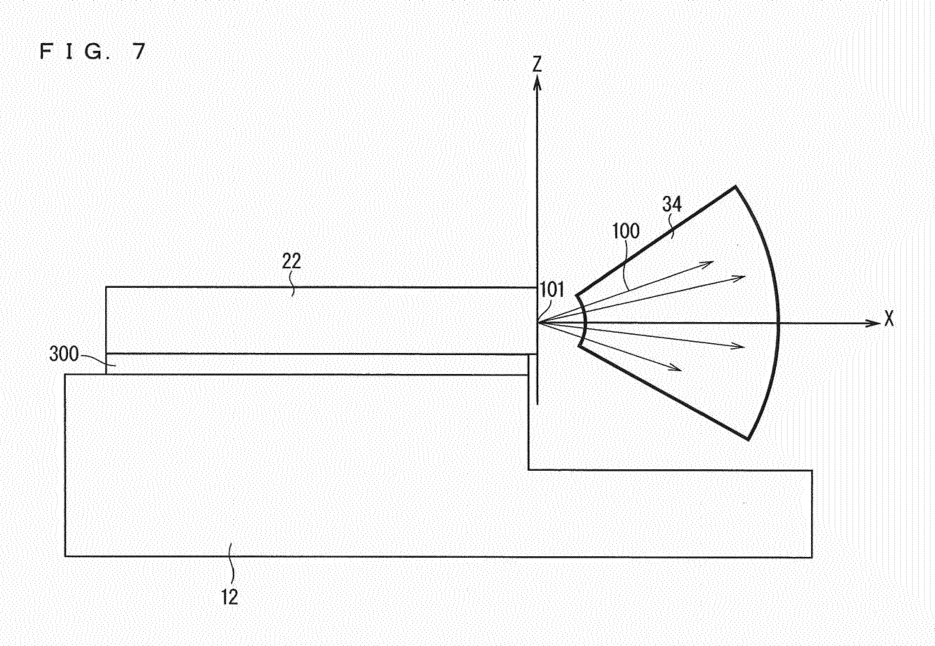

FIG. 7 is a schematic side view of a configuration for implementing a light shaping apparatus according to a modification of the embodiment. As illustrated in FIG. 7, a sub-mount 300 may be disposed between the stem 12 and the semiconductor laser device as necessary. Here, the stem 12 is a member holding the semiconductor laser device and the reflective mirror portion 34. The sub-mount typically insulates electricity and conducts heat, and is composed of an electrical insulator having a plate shape. The electrical insulator has a plurality of metallized patterns on its front surface. The electrical insulator also has a metallized pattern all over its back surface. The electrical insulator is often made of SiC or AlN, both of which have high heat conductivity.

The metallized patterns of the sub-mount are soldered with the semiconductor laser device. The metallized patterns of the sub-mount are electrically connected to each driving electrode of the semiconductor laser device through ultrasonic welding using a conductive wire of, for instance, Au.

These metallized patterns are not for the sake of power supply, but for the sake of preventing the warpage of the sub-mount resulting from the difference in linear expansion coefficient between the electrical insulator and the metallized patterns.

Placing the sub-mount 300 makes the placement surface of the semiconductor laser device no longer flush with the placement surface of the reflective mirror portion 34. However, since the sub-mount 300 typically has a thickness of 300 $\mu$m or more and 600 $\mu$m or less, lifting the placement surface of the semiconductor laser device to a higher level by placing the sub-mount 300 enables more beams of light diverging in the fast-axis direction of the semiconductor laser device to be substantially collimated.

It is noted that the sub-mount 300 may be used in the configuration illustrated in FIG. 1.

<Effects of Aforementioned Embodiments>

The following describes examples of the effects of the aforementioned embodiments. Although these effects are based on the specific configurations described in the embodiments, these specific configurations may be replaced with any different specific embodiment described in the Description within a range in which like effects are achieved.

Further, the replacement may be done between multiple embodiments. That is, configurations illustrated in different embodiments may be combined to thus achieve like effects.

The light shaping apparatus according to the aforementioned embodiment includes a linear light source, the reflective mirror portion 32, and the optical device 40. The linear light source has at least one light-emitting point. The reflective mirror portion 32 has a reflective surface. Here, the reflective surface is an orthogonal parabolic surface formed by rotating a curved line about the rotation axis 33. The optical device 40 is disposed at the convergence point 200 where light emitted from the linear light source converges. The light from the linear light source is reflected by the reflective mirror portion 32 surrounding at least part of the linear light source. The light from the linear light source converges at the convergence point 200. The rotation axis 33 of the reflective mirror portion 32 extends in the longer-side direction of the linear light source. The light-emitting point of the linear light source is located on the rotation axis 33 of the reflective mirror portion 32. The entrance end face 41 of the optical device 40 is located at the convergence point 200. The entrance end face 41 is an end face on which the light from the linear light source is incident. Here, the linear light source corresponds to the semiconductor laser device 20 for instance. Further, the light-emitting point corresponds to the exit end face 101 for instance.

Such a configuration enables the reflective mirror portion 32, which has a reflective surface being an orthogonal parabolic surface, to concentrate the light 100 diverging in the longer-side direction of the linear light source. This achieves shaping of the light from the linear light source while preventing mechanism upsizing. Further, when a single reflective mirror portion 32 is provided for a multi-emitter linear light source having a plurality of output windows, the above configuration still achieves light shaping, thereby reducing optical components necessary for light shaping, or retainers for these components. The reduction in the components or the retainers reduces process steps for component assembly. Consequently, materials are reduced, and manufacturing cost is lowered. In addition, the process step simplification lowers assembly defectiveness. In addition, the component or retainer reduction lowers the frequency of arrangement and processing that require high precision. Further, the convergence point 200 of the light concentrated by the reflective mirror portion 32 is substantially circular. This eliminates the need to rotate the reflective mirror portion 32 (e.g., making both longer-side directions correspond to each other) with respect to the optical device 40 whose entrance end face 41 is located at the convergence point 200. In addition, the above configuration does not require a long optical distance for light shaping. This facilities compact packaging of a light source system. Consequently, the light source system can be contained in a package called TO-CAN to be thus resistant to environments.

It is noted that the configurations illustrated in the Description other than these configurations can be omitted as necessary. That is, at least these configurations can bring the aforementioned effects.

However, the above configurations can additionally include at least one of the other configurations illustrated in the Description as necessary; that is, the above configurations can additionally include the other configurations described in the Description that are not mentioned herein. Such additionally included configurations can similarly bring the aforementioned effect.

According to the aforementioned embodiment, the reflective surface of the reflective mirror portion 32 is an orthogonal parabolic surface formed by rotating, about the rotation axis 33, a curved line expressed in an expression below, where a Y-axis denotes the rotation axis 33, where f denotes a focal length.

[Numeral 3]

$$Y = 2 \times \{f(f+X)\}^{1/2} \quad \text{(where } -f \leq X \leq 0 \text{ is satisfied)}$$

$$Y = 2 \times \{f(f-X)\}^{1/2} \quad \text{(where } 0 \leq X \leq f \text{ is satisfied)}$$

Such a configuration enables the reflective mirror portion 32, which has a reflective surface being an orthogonal parabolic surface, to concentrate the light 100 diverging in the longer-side direction of the linear light source. This enables shaping of the light from the linear light source while preventing mechanism upsizing.

The light shaping apparatus according to the aforementioned embodiment includes a plurality of linear light sources arranged along the rotation axis 35 of the reflective mirror portion 34. The light emitted from the linear light sources converges at the convergence point 201. Here, the plurality of linear light sources correspond to the semiconductor laser devices 22, 23, 24, 25, 26, and 27 for instance. Such a configuration, in which the semiconductor laser devices (i.e., the semiconductor laser devices 22, 23, 24, 25, 26, and 27) are arranged along the rotation axis 35 of the reflective mirror portion 34, enables the light 100 reflected by the reflective mirror portion 34 to converge at the convergence point 201. This enables shaping of the light emitted from the linear light sources while preventing mechanism upsizing.

The optical axis of the optical device 40 according to the aforementioned embodiment coincides with the rotation axis 33 of the reflective mirror portion 32. In such a configuration, the light 100 incident on the entrance end face 41 of the optical device 40 is output from the exit end face 42 as collimated light. This enhances the efficiency of light use in a posterior optical system.

The linear light sources according to the aforementioned embodiment are semiconductor laser devices. Such a configuration enables the reflective mirror portion 32 to concentrate the light 100 diverging in the slow-axis direction, when the semiconductor laser device 20 having a relatively wide width in the slow-axis direction.

The optical device 40 according to the aforementioned embodiment reflects the incident light multiple times and outputs collimated light. In such a configuration, the light 100 incident on the entrance end face 41 of the optical device 40 is output from the exit end face 42 as collimated light. This enhances the efficiency of light use in a posterior optical system.

The light shaping apparatus according to the aforementioned embodiment includes a base holding the linear light source and the reflective mirror portion 34, and the sub-mount 300 sandwiched between the base and the linear light source. Here, the base corresponds to the stem 12 for instance. Such a configuration, in which the sub-mount 300 is provided to lift the placement surface of the semiconductor laser device 20 to a higher level with respect to the reflective mirror portion 32, enables more light 100 diverging in the fast-axis direction of the semiconductor laser device 20 to be substantially collimated.

<Modifications of Aforementioned Embodiments>

In some cases, the aforementioned embodiments describe the material quality, material, size, and shape of each component, the relative relationship in arrangement between the components, conditions for implementation, or other things. They are illustrative in all aspects, and are thus not limited to what are described in the Description.

Accordingly, numerous variations and equivalents that are not illustrated herein can be assumed within the range of the technique disclosed in the Description. For instance, at least one component can be modified, added, or omitted. Further, at least one component can be extracted from at least one embodiment to be thus combined with a component in another embodiment.

Unless otherwise contradicted, the components described in the aforementioned embodiments in such a manner that "one component" is provided may be formed of "one or more" components.

Further, the individual components in the aforementioned embodiments are conceptual units. Thus, within the range of the technique disclosed in the Description, one component can be formed of multiple structures, one component can correspond to part of a certain structure having one component, and multiple components can be included in one structure.

Each component includes a structure having a different configuration or a different shape as long as the structure of the different configuration or the different shape achieves the same function.

The foregoing descriptions in the Description are referred for all purposes relating to the present technique. It is thus not an admission that any of the descriptions provided herein are conventional techniques.

If the aforementioned embodiments contain descriptions about a material that is not particularly specified, it is to be understood that an example of the material is an alloy containing other additives within the material unless otherwise contradicted.

Explanation of Reference Signs

10, 12 stem, 11 waveguide, 20, 22, 23, 24, 25, 26, 27 semiconductor laser device, 21 connecting substrate, 30, 31 curved line, 32, 34 reflective mirror portion, 33, 35 rotation axis, 40, 43 optical device, 41, 44 entrance end face, 42, 45, 101 exit end face, 100 laser light, 102, 104 light 103 linear light source, 200, 201 convergence point, 300 sub-mount.

**Claims**

1. A light shaping apparatus comprising:

    at least one linear light source (20, 22 to 27) comprising at least one light-emitting point (101);
    a reflective mirror portion (32, 34) comprising a reflective surface that is an orthogonal parabolic surface formed by rotating a curved line about a rotation axis (33, 35); and
    an optical device (40, 43) disposed at a convergence point (200, 201) where light (100) emitted from the at least one linear light source (20, 22 to 27) converges,
    wherein the light (100) emitted from the at least one linear light source (20, 22 to 27) is reflected by the reflective mirror portion (32, 34) surrounding at least part of the at least one linear light source (20, 22 to 27), and further converges at the convergence point (200, 201),
    the rotation axis (33, 35) of the reflective mirror portion (32, 34) extends in a longer-side direction of the at least one linear light source (20, 22 to 27),
    the light-emitting point (101) of the at least one linear light source (20, 22 to 27) is located on the rotation axis (33, 35) of the reflective mirror portion (32, 34),
    the optical device (40, 43) comprises an entrance end face (41, 44) located at the convergence point (200, 201), the entrance end face (41, 44) being an end face on which the light (100) emitted from the at least one linear light source (20, 22 to 27) is incident, and
    the reflective surface of the reflective mirror portion (32, 34) is the orthogonal parabolic surface formed by rotating, about the rotation axis (33, 35), the curved line expressed by the following expression, where a Y-axis denotes the rotation axis (33, 35), where f denotes a focal length:

$$Y = 2 \times \{f(f+X)\}^{1/2} \quad (-f \leq X \leq 0)$$

$$Y = 2 \times \{f(f - X)\}^{1/2} \ (0 \leq X \leq f) \,,$$

and

the at least one linear light source comprises a plurality of linear light sources (22 to 27) arranged along the rotation axis (35) of the reflective mirror portion (34), wherein

the light (100) emitted from the plurality of linear light sources (22 to 27) converges at the convergence point (201).

2. The light shaping apparatus according to claim 1, wherein the optical device (40, 43) comprises an optical axis that coincides with the rotation axis (33, 35) of the reflective mirror portion (32, 34).

3. The light shaping apparatus according to claim 1 or 2 wherein the at least one linear light source (20, 22 to 27) is a semiconductor laser device.

4. The light shaping apparatus according to any one of claims 1 to 3, wherein the optical device (40, 43) is configured to reflect, a plurality of times, the light (100) as received, and output collimated light.

5. The light shaping apparatus according to any one of claims 1 to 4, further comprising:

a base (10, 12) holding the at least one linear light source (20, 22 to 27) and the reflective mirror portion (32, 34); and

a sub-mount (300) provided to be sandwiched between the base (10, 12) and the at least one linear light source (20, 22 to 27).

**Patentansprüche**

1. Lichtformungsvorrichtung, umfassend:

mindestens eine lineare Lichtquelle (20, 22 bis 27) umfassend mindestens einen Licht emittierenden Punkt (101);

einen reflektierenden Spiegelbereich (32, 34), der eine reflektierende Oberfläche aufweist, die eine orthogonal parabolische Fläche ist, die durch das Rotieren einer gekrümmten Linie um eine Drehachse (33, 35) gebildet wird; und

eine optische Vorrichtung (40, 43), die an einem Konvergenzpunkt (200, 201) angeordnet ist, an dem Licht (100), das von der mindestens einen linearen Lichtquelle (20, 22 bis 27) ausgestrahlt wird, konvergiert,

wobei das Licht (100), das von der mindestens einen linearen Lichtquelle (20, 22 bis 27) ausgestrahlt wird, von dem reflektierenden Spiegelbereich (32, 34), der die mindestens eine lineare Lichtquelle (20, 22 bis 27) mindestens zum Teil umgibt, reflektiert wird und im weiteren Verlauf im Konvergenzpunkt (200, 201) konvergiert,

die Drehachse (33, 35) des reflektierenden Spiegelbereichs (32, 34) sich in Richtung einer längeren Seite der mindestens einen linearen Lichtquelle (20, 22 bis 27) erstreckt,

der Licht emittierende Punkt (101) der mindestens einen linearen Lichtquelle (20, 22 bis 27) sich auf der Drehachse (33, 35) des reflektierenden Spiegelbereichs (32, 34) befindet,

die optische Vorrichtung (40, 43) eine Eingangsstirnseite (41, 44) aufweist, die sich am Konvergenzpunkt (200, 201) befindet, wobei die Eingangsstirnseite (41, 44) eine Stirnseite ist, an der das Licht (100), das von der mindestens einen linearen Lichtquelle (20, 22 bis 27) ausgestrahlt wird, einfällt, und

die reflektierende Oberfläche des reflektierenden Spiegelbereichs (32, 34) die orthogonale parabolische Fläche ist, die durch das Rotieren der durch folgende Formel ausgedrückten gekrümmten Linie um eine Drehachse (33, 35) gebildet wird, wobei eine Y-Achse für die Drehachse (33, 35) steht, wobei f eine Brennweite angibt:

$$Y = 2 \times \{f(f+X)\}^{1/2} \ (-f \leq X \leq 0)$$

$$Y = 2 \times \{f(f-X)\}^{1/2} \ (0 \leq X \leq f) \,,$$

und

die mindestens eine lineare Lichtquelle eine Vielzahl linearer Lichtquellen (22 bis 27) aufweist, die entlang der Drehachse (35) des reflektierenden Spiegelbereichs (34) angeordnet sind, wobei das Licht (100), das von der Vielzahl linearer Lichtquellen (22 bis 27) ausgestrahlt wird, am Konvergenzpunkt (201) konvergiert.

**2.** Lichtformungsvorrichtung nach Anspruch 1, bei welcher die optische Vorrichtung (40, 43) eine optische Achse aufweist, die mit der Drehachse (33, 35) des reflektierenden Spiegelbereichs (32, 34) übereinstimmt.

**3.** Lichtformungsvorrichtung nach Anspruch 1 oder 2, bei welcher die mindestens eine lineare Lichtquelle (20, 22 bis 27) eine Halbleiterlaser-Vorrichtung ist.

**4.** Lichtformungsvorrichtung nach einem der Ansprüche 1 bis 3, bei welcher die optische Vorrichtung (40, 43) ausgebildet ist, das empfangene Licht (100) vielfach zu reflektieren und als kollimiertes Licht auszugeben.

**5.** Lichtformungsvorrichtung nach einem der Ansprüche 1 bis 4, ferner umfassend:

einen Sockel (10, 12), der die mindestens eine lineare Lichtquelle (20, 22 bis 27) und den reflektierenden Spiegelbereich (32, 34) stützt; und
einen Subträger (300), der dafür vorgesehen ist, zwischen dem Sockel (10, 12) und der mindestens einen linearen Lichtquelle (20, 22 bis 27) angeordnet zu sein.

## Revendications

**1.** Appareil de formation de lumière comprenant :

au moins une source de lumière linéaire (20, 22 à 27) comprenant au moins un point d'émission de lumière (101) ;
une partie de miroir réfléchissant (32, 34) comprenant une surface réfléchissante qui est une surface parabolique orthogonale formée par rotation d'une ligne incurvée autour d'un axe de rotation (33, 35) ; et
un dispositif optique (40, 43) disposé à un point de convergence (200, 201) où la lumière (100) émise depuis l'au moins une source de lumière linéaire (20, 22 à 27) converge,
dans lequel la lumière (100) émise depuis l'au moins une source de lumière linéaire (20, 22 à 27) est réfléchie par la partie de miroir réfléchissant (32, 34) entourant au moins une partie de l'au moins une source de lumière linéaire (20, 22 à 27), et converge ensuite au point de convergence (200, 201),
l'axe de rotation (33, 35) de la partie de miroir réfléchissant (32, 34) s'étend dans une direction longitudinale de l'au moins une source de lumière linéaire (20, 22 à 27),
le point d'émission de lumière (101) de l'au moins une source de lumière linéaire (20, 22 à 27) est situé sur l'axe de rotation (33, 35) de la partie de miroir réfléchissant (32, 34),
le dispositif optique (40, 43) comprend une face d'extrémité d'entrée (41, 44) située au point de convergence (200, 201), la face d'extrémité d'entrée (41, 44) étant une face d'extrémité sur laquelle la lumière (100) émise depuis l'au moins une source de lumière linéaire (20, 22 à 27) est incidente, et
la surface réfléchissante de la partie de miroir réfléchissant (32, 34) est la surface parabolique orthogonale formée par rotation, autour de l'axe de rotation (33, 35), de la ligne incurvée exprimée par l'expression suivante, où un axe Y désigne l'axe de rotation (33, 35), où f désigne une longueur focale :

$$Y = 2 \times \{f(f+X)\}^{1/2} \ (-f \leq X \leq 0)$$

$$Y = 2 \times \{f(f-X)\}^{1/2} \ (0 \leq X \leq f),$$

et
l'au moins une source de lumière linéaire comprend une pluralité de sources de lumière linéaires (22 à 27) agencées le long de l'axe de rotation (35) de la partie de miroir réfléchissant (34), dans lequel
la lumière (100) émise depuis la pluralité de sources de lumière linéaires (22 à 27) converge au point de convergence (201).

**2.** Appareil de formation de lumière selon la revendication 1, dans lequel le dispositif optique (40, 43) comprend un axe optique qui coïncide avec l'axe de rotation (33, 35) de la partie de miroir réfléchissant (32, 34).

3. Appareil de formation de lumière selon la revendication 1 ou 2, dans lequel l'au moins une source de lumière linéaire (20, 22 à 27) est un dispositif laser à semi-conducteur.

4. Appareil de formation de lumière selon l'une quelconque des revendications 1 à 3, dans lequel le dispositif optique (40, 43) est configuré pour réfléchir, une pluralité de fois, la lumière (100) reçue, et la lumière collimatée délivrée en sortie.

5. Appareil de formation de lumière selon l'une quelconque des revendications 1 à 4, comprenant en outre :

une base (10, 12) maintenant l'au moins une source de lumière linéaire (20, 22 à 27) et la partie de miroir réfléchissant (32, 34) ; et
un sous-montage (300) conçu de façon à être intercalé entre la base (10, 12) et l'au moins une source de lumière linéaire (20, 22 à 27).

F I G .   1

EP 3 540 510 B1

F I G . 2

F I G . 3

F I G . 4

EP 3 540 510 B1

F I G. 5

EP 3 540 510 B1

FIG. 6

EP 3 540 510 B1

F I G. 7

**REFERENCES CITED IN THE DESCRIPTION**

**Patent documents cited in the description**

- US 5513201 A